Europäisches Patentamt

European Patent Office

Office européen des brevets

(19)

(11) Publication number: **0 115 168**
**A1**

(12) **EUROPEAN PATENT APPLICATION**

(21) Application number: **83307799.3**

(22) Date of filing: **21.12.83**

(51) Int. Cl.³: **G 03 B 23/08**

(30) Priority: **28.12.82 ZA 829518**

(43) Date of publication of application:
**08.08.84 Bulletin 84/32**

(84) Designated Contracting States:
**AT BE CH DE FR GB IT LI LU NL SE**

(71) Applicant: **Clark, Russell David**
**5 Portman Road**
**Bryanston Transvaal Province(ZA)**

(71) Applicant: **Tyler, John Graham**
**334 Meadows End Road**
**Woodmead Extension 8 Transvaal Province(ZA)**

(72) Inventor: **Clark, Russell David**
**5 Portman Road**
**Bryanston Tvl. Province(ZA)**

(74) Representative: **Howden, Christopher Andrew et al,**
**FORRESTER & BOEHMERT Widenmayerstrasse 4/I**
**D-8000 München 22(DE)**

(54) **A projector assembly.**

(57) This invention relates to slide projector assemblies wherein holders for transparencies arranged in series one behind the other and side by side can be supported and moved on a carrier which is rotatable and reciprocatable transversely of the projector to bring the individual transparencies into the viewing position and includes means for collecting the holders after their passage through the machine.

FIG. 1

Croydon Printing Company Ltd.

" A PROJECTOR ASSEMBLY "

THIS INVENTION relates to projectors for the projection of images obtained from transparent photographic film and more particularly to projectors for stationary projection of what are known as "slides".

Projectors of the kind above referred are well known and are made to obtain enlarged images from photographic transparencies mounted in frames. These frames enable the transparencies to be properly located in the projector for display of the image and in the more modern type of equipment it is possible to have transparencies supported in spaced relationship behind one another in a holder which is removably located on the projector. These transparencies may then be automatically moved into and out of the viewing position and the projector sequentially.

The movement may be controlled through suitable electrically powered means but in any event an appreciable delay must be experienced between the display of two transparencies on the series to allow the front one to be transported out of the viewing position back into the holder, for the holder to be moved one step, and for the second transparency to be transported into the viewing portion.

The holders referred to above also have the inherent disadvantage that they do not allow particular transparencies in the series held in the holder to be easily located. Also do they allow for the transparencies to be readily checked to ensure that they are properly located in the holder. Generally it is also necessary that the loaded holders be carefully handled as the transparencies are not secured therein and are easily dislodged.

The object of the present invention is to provide a holder and projector assembly which reduces the above disadvantages.

According to the invention there is provided a projector assembly for individual film transparencies comprising a conventional illumination and lens assembly, a support for a transparency holder in flexible strip form, a rotatable carrier to

/...

draw the holder through the projector assembly to bring individual transparencies into the viewing position in the projector and means for receiving the holder after its passage through the projector.

Further features of this invention provide for the holder to be such that transparencies are located in series in side by side and one behind the other relationship thus providing a plurality of series of transparencies across the width of the holder as well as down the length thereof. In this event means are also provided to move the carrier across the projection assembly.

The invention also provides for the projector to include a light table onto which the holder may be placed to display a plurality of the transparencies in the holder at one time.

Preferably the holders will be in sheet form enabling them to be readily and safely stored either suspended in appropriate cabinet or in book-like covers for easy location and selection prior to display.

- 4 -

These and many other features of this invention will become apparent from the following description of one preferred embodiment of the invention. Reference is made in the description to the accompanying diagrammatic drawings in which:

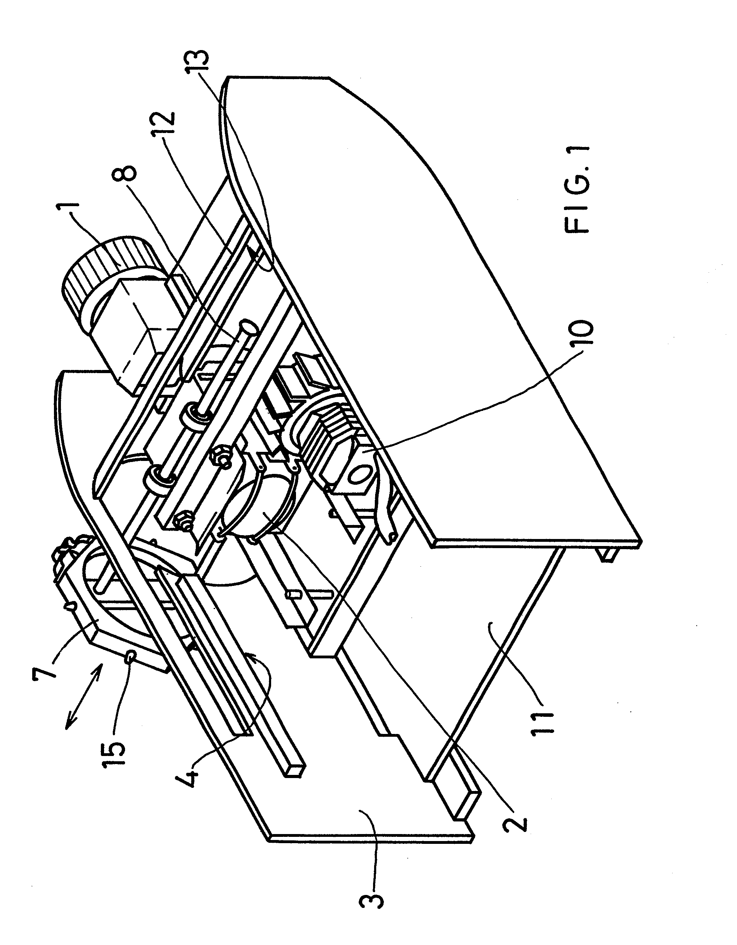

Figure 1 is a plan view of the assembly (with the light table removed) and,

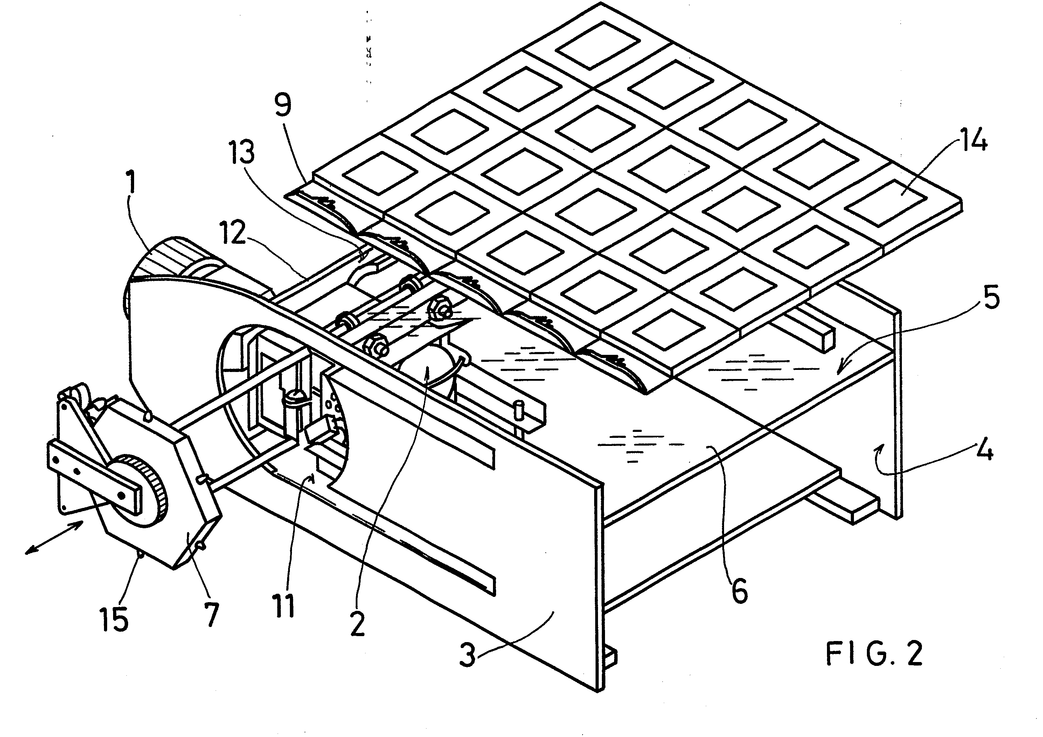

Figure 2 is a side elevation.

As shown the projector 1 comprises a standard illuminating and lens assembly indicated generally at 2. The assembly is mounted adjacent one side 3 of a supporting enclosure frame 4 for the projector.

Above and behind the projection assembly 3 is a support structure in the form of a light table 5 consisting of a translucent sheet 6 with a light mounted in the frame 4 below the sheet 6. The front edge of the sheet 6 has associated therewith a feed mechanism in the form of a pair of rotatable discs 7

/...

at each side of a carriage 8 adapted to guide a flexible holder 9 through the lens assembly. The carriage 8 is preferably a plurality of rods extending between the discs located and made to a size that they will not interfere with the projected image through the transparencies described below.

The carriage 8 has a powered drive mechanism indicated at 10 which enables the carriage and the holder 9 to be moved transversely across the frame 4 to project outwardly through the side 3 thereof.

This drive mechanism is also adapted to rotate at least one of the discs 7 in a step by step manner so that the holder 9 can be drawn downwardly from the sheet 6 through the lens assembly to be deposited on a receiving platform 11 in the lower part of the frame 4.

Suitable guides 12 will be provided in the frame 4 so that the movement of the holder 9 in the frame 4 is properly constrained. These guides will also include a confined opening 13 through which

/...

the holders 9 are drawn from the sheet 6. In this way it is possible for a series of holders 9 to be stacked on sheet 6 to be automatically drawn individually and sequantially from the stack for viewing of individual transparencies in the holders 9.

Each holder 9 in this specific example consists of a sheet of suitably flexible plastics material providing a series of pockets 14 across the width of the sheet as well as down the length of the sheet. The pockets are formed to receive the mounting frames of conventional 'slide' transparencies and are provided with windows to ensure unobstructed passage of light through the transparencies. The sheets will be formed to have lines of weakness across the width thereof between the rows of pockets so that while the sheets have sufficient rigidity across their width to enable them to be easily handled they will be readily able to fold in rows of transparencies over the edges of the discs.

Down at least one edge of the sheet forming the holder 9 is a means adapted to co-operate with the associated disc 7 so that the holder will be

/...

positively, and in the correct location, drawn past the projection assembly. In the example shown the discs 7 have equidistantly spaced pins 15 projecting from the periphery thereof adapted to engage in holes through strengthened edges to the sheet. The discs 7 have symmetrically formed flats around the periphery of a length substantially equal to the length of the mounting frame and the distance between each horizontal row of transparencies.

The drive mechanisms above referred to are preferably electrically powered and controlled. Those mechanisms and controls may be of any convenient form and designed for particular application by those skilled in such art. The controls can be effected either at the projector or remotely therefrom in known manner.

Thus in use a holder 9 is located on the sheet 6 of the light table which at this time is used only to support the holder 9. In this position the front ends of the holder will engage the discs 7. The drive mechanisms are activated so that the transparency in the foremost in the series and adjacent side 3 of the frame 4 is brought into the viewing portion in the projector assembly.

/...

- 8 -

For viewing the next transparency the carriage 8 is moved across the frame 4. This is repeated until all the transparencies in the first row across the holder 9 have been viewed. The discs 7 are then rotated to bring the next row along the length of the holder into position and the transparencies in this row are sequentially viewed as the carriage 8 is retracted into the frame 4.

The next series is then drawn by discs 7 into position and the operation above referred to repeated until all the transparencies in the holder 9 have been viewed.

If a stack of holders 9 are placed on the sheet 6 the opening 13 will ensure that the holders are drawn in sequence through the viewing assembly without the necessity for unloading and re-loading the projector. This will require that the length of the pins projecting from the discs will be accurately related to the thickness of the edge of the holders 9.

The electrical controls can also in known manner be easily adapted so that the drive mechanics can be accellerated to bring forward any chosen

/...

transparency into the viewing loacation out of the normal sequence. Also the controls can be time orientated so that the image of each transparency can be displayed for a predetermined period whereafter the next transparency will be automatically brought into the viewing position.

However variations within the scope of the invention can be made to the above example. For example the holder can be made as a continuous strip wound around a pair of suitable wheels and the drive mechanism modified to accomodate such a holder. The holder may in this case also have laterally arranged series of transparencies and utilise a carriage movable across the frame of the projector in a manner similar to that above described. Such a holder will enable the images of the transparencies to be continuously displayed as is frequently advantageous for advertising purposes or the like.

Also the holders may have the transparencies directly mounted thereon thus avoiding the necessity to use the conventional type of frames used with existing projector assemblies. The holders may also be such that they have holes in the areas where

/...

the transparencies are located so that the light is transmitted directly through the transparencies.

The light table may be made dismountable from the frame 4 and in this manner the projector can be made compact for storage when not in use.

It will be appreciated from what has been described above that only a single movement is required to change the transparency which is located in the viewing position. This reduces the period wherein nothing is displayed from that experienced with conventional automatic projectors.

The features disclosed in the foregoing description, in the following claims and/or in the accompanying drawings may, both separately and in any combination thereof, be material for realising the invention in diverse forms thereof.

CLAIMS

1. A projector assembly for individual film transparencies comprising a conventional illumination and lens assembly, a support for a transparency holder in flexible strip form, a rotatable carrier to draw the holder through the projector assembly to bring individual transparencies into the viewing position in the projector and means for receiving the holder after its passage through the projector.

2. A projector assembly as claimed in claim 1 in which the carrier is movable transversely of the projection assembly.

3. A projector as claimed in claim 1 in which the support forms a light table for the transparency holder.

4. A projector assembly as claimed in claim 2 including a powered drive assembly to rotate the carrier and reciprocate in
transversely of the projector assembly.

5.    A projector assembly as claimed in claim
1 including a frame having guides
providing an opening enabling a single
transparency holder to be moved from the
support.

6.    A holder for transparencies for use in an
assembly as claimed in claim 2 comprising
a flexible sheet for mounting
transparencies in series one behind the
other and side by side enabling light to
be transmitted through the transparencies
and having a side(s) with means for engaging
the projector assembly discs and having
transverse lines of weakness formed in
the sheets between each side by side
series.

7.    A holder as claimed in claim 6 in which
the sheet has pockets to receive
transparency frames and openings which
will locate over the transparencies.

FIG. 1

FIG. 2

## DOCUMENTS CONSIDERED TO BE RELEVANT

EP 83307799.3

| Category | Citation of document with indication, where appropriate, of relevant passages | Relevant to claim | CLASSIFICATION OF THE APPLICATION (Int. Cl. ³) |
|---|---|---|---|
| A | FR - A - 1 231 770 (LEONARD) <br> * Fig. 1-14 * | 1-7 | G 03 B 23/08 |
| A | DE - B2 - 2 449 243 (DRWIEGA) <br> * Claims 1-21; fig. 7-10 * | 1-7 | |
| A | DE - A1 - 2 914 833 (DRWIEGA) <br> * Fig. 1,2 * | 1-7 | |
| A | GB - A - 2 016 738 (SLIDEX) <br> * Abstract; fig. 1 * | 1 | |

|  | TECHNICAL FIELDS SEARCHED (Int. Cl. ³) |
|---|---|
|  | G 03 B 23/00 |
|  | G 03 B 21/00 |
|  | G 03 B 31/00 |

The present search report has been drawn up for all claims

| Place of search | Date of completion of the search | Examiner |
|---|---|---|
| VIENNA | 03-04-1984 | VAKIL |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82